# EUROPEAN PATENT APPLICATION

(11) **EP 4 750 093 A1**
(43) Date of publication of application: **27.05.2026**
(21) Application number: 25216939.6
(22) Date of filing: 19.11.2025
(51) Int. Cl.: H04S 7/00, H04R 5/02

(54) **SPATIAL AUDIO LOCALIZATION FOR HEADREST SPEAKERS USING ADDITIONAL CUES**

(30) Priority: 25.11.2024 US 202418959037
(71) Applicant: Harman International Industries, Incorporated, Stamford, Connecticut 06901 (US)
(72) Inventor: Wahnish, Thomas, North Hollywood, CA, 91601 (US); Baker, Jeffrey Ross, Thousand Oaks, CA, 91320 (US); Welti, Todd S., Thousand Oaks, CA, 91360 (US); Olive, Sean Edward, Oak Park, CA, 91377 (US); Zazzi, Justin, Stamford, CT, 06901 (US)
(74) Representative: Kraus & Lederer PartGmbB

(57) **Abstract**

An in-car audio system, may include at least one vehicle speaker arranged in a vehicle headrest behind an occupant and configured to transmit audio signals to the associated occupant, the at least one vehicle speaker including a pair of speakers configured to provide binaural audio signals to the associated occupant; at least one visual indicator arranged within a vehicle cabin at a first location and configured to provide a visual cue to the occupant; a processor programmed to instruct the speaker to emit an audio signal perceived at the first location, and instruct the at least one visual indicator to concurrently illuminate with the audio signal to provide visual reinforcement to the occupant that the audio signal perceived is associated with the first location.

## Description

### TECHNICAL FIELD

Disclosed herein are methods and systems for spatial audio localization for headrest speakers using additional cues.

### BACKGROUND

Vehicles are often equipped with various infotainment systems including vehicle radio, screens, headphones, spatial audio systems, etc. Often vehicles carry multiple occupants, and present various forms and types of information to drivers and passenger. As vehicles advance in performance, users also expect the user experience to advance.

### SUMMARY

An in-car audio system, may include at least one vehicle speaker arranged in a vehicle headrest behind an occupant and configured to transmit audio signals to the associated occupant, the at least one vehicle speaker including a pair of speakers configured to provide binaural audio signals to the associated occupant; at least one visual indicator arranged within a vehicle cabin at a first location and configured to provide a visual cue to the occupant; a processor programmed to instruct the speaker to emit an audio signal perceived at the first location, and instruct the at least one visual indicator to concurrently illuminate with the audio signal to provide visual reinforcement to the occupant that the audio signal perceived is associated with the first location.

An in-car audio system may include at least a pair of vehicle speakers configured to transmit binaural audio signals to the associated occupant at perceived at a plurality of virtual locations throughout a vehicle cabin, at least one visual indicator arranged at each of the plurality of locations throughout the vehicle cabin, the visual indicators configured to provide a visual cue to the occupant at the respective location, a processor programmed to instruct the speakers to emit an audio signal perceived at a first one of the virtual locations, instruct the at least one visual indicator associated with the first one of the virtual locations to concurrently illuminate with the emitting of the audio signal to provide visual reinforcement to the occupant that the audio signal perceived is associated with the first location.

An in-car audio system may include at least one vehicle speaker arranged in a vehicle headrest behind an occupant and configured to transmit audio signals to the associated occupant, the at least one vehicle speaker including a pair of speakers configured to provide binaural audio signals to the associated occupant, at least one infotainment display device arranged within the vehicle cabin and configured to provide visual confirmation to a user associated with the virtual location, a processor programmed to instruct the speaker to emit an audio signal perceived at a first location, and instruct the at least one infotainment device to highlight a first location thereon associated with the perceived location to provide visual reinforcement to the occupant that the audio signal perceived is associated with the first location.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompanying drawings in which:
FIG. 1 illustrates an example video audio system for a vehicle;
FIG. 2 illustrates an example block diagram of the audio system of Figure 1;
FIG. 3 illustrates an example display 300 for providing contextual cues with binaural audio signals.
FIG. 4 illustrates an example sequence of the training mode in terms of the binaural audio.
FIGs. 5A and 5B illustrate example virtual audio splash screens.
FIG. 6 illustrates an example process 600 of the audio system for the vehicle of FIG. 1.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

One of the vehicle technologies that continues to advance is the digital cockpit, and digital displays are being used more frequently to allow drivers to control numerous aspects of the vehicle at their fingertips and to deliver notifications for events such as hazards or other safety issues. The displays provide a strong visual awareness for the driver but with a limited sense of spatial perception. Additionally, automobile manufacturers are pushing towards moving speakers to the headrests, which frees up space and decreases weight to the car. This allows each headrest to present individualized personal spatial audio content to each occupant. For example, location-based navigation prompts can be presented only to the driver. Further, auditory alerts may be presented to alert the driver of an upcoming hazard, blind spot, etc., as if the alert were coming from the event location. In another use-case, nighttime deer detection may be presented. In this example, a binaural audio cue would give the driver a better understanding of where the hazard actually is, which is particularly useful in rural areas where visibility is limited at nighttime. This would allow the driver to react quickly, stay more focused on the road and improve the user experience.

If tuned well, vehicles currently have the capability of delivering an immersive audio experience for the passengers through the speakers in the doors, dashboard, pillars and other places. This cannot, however, deliver personal binaural audio, in which each passenger can enjoy their own audio content without being disturbed by what the other passengers are listening to. In some instances, headphones allow for an individualized experience. Headphones are capable of playing binaural audio content using the Head-Related Transfer Function (HRTF) of the individual. While headphone playback works well for binaural audio, it is not always suitable for an automotive application.

In the event that binaural audio reproduction could occur via vehicle speakers, such as headrest speakers, once the speakers are moved to directly behind the listener in the headrest, the user has more difficulty localizing any spatial audio cue that is intended to be rendered from the frontal hemisphere.

In order to accurately depict a high-level spatial representation of an event, humans rely heavily on information from multiple senses, particularly visual information. Research has shown that visual information is generally stronger than auditory information and when presented with conflicting information, the visual component is superior. For example, if an owl flies in front of a person but the owl sounds coming from behind, the person will prioritize the visual cue instead of looking behind them where the sound is originating from. When exposed to sound in the real world, humans visualize events using the visual cortex of their brain. Then, the auditory cortex uses parameters like interaural time difference (ITD) and interaural level difference (ILD) to associate sounds with those visual locations. As humans get older and develop a strong sense of auditory localization, reaction time is still quicker when there is a visual frame of reference to complement the auditory cue.

By incorporating a form of perceptual training, sound localization accuracy for a human may improve over time. Disclosed herein is a method for improved spatial audio localization using additional cues when the speakers are directly behind the listener, as in a car headrest. As the headrest speakers deliver a binaural audio signal to the listener of a discrete virtual location, an additional cue will go off simultaneously within the vehicle that is representative of that virtual audio location. The audio signal and additional cues can be delivered in multiple ways and user-training may occur in several phases.

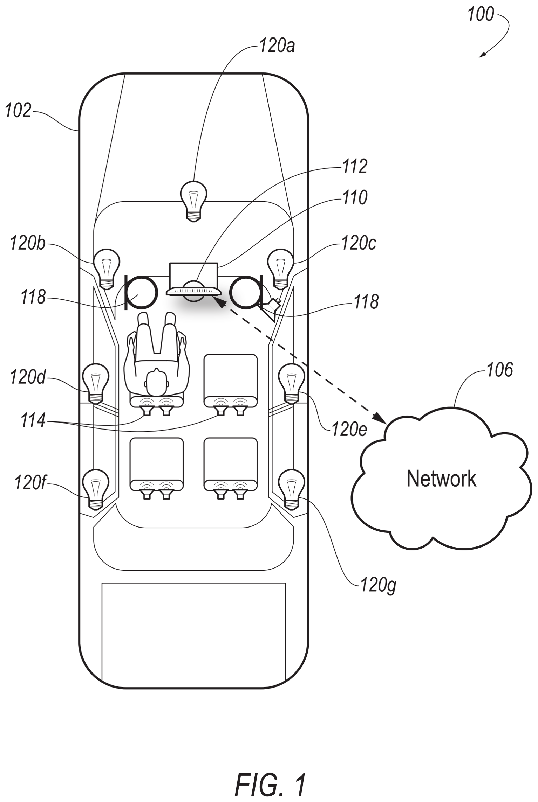

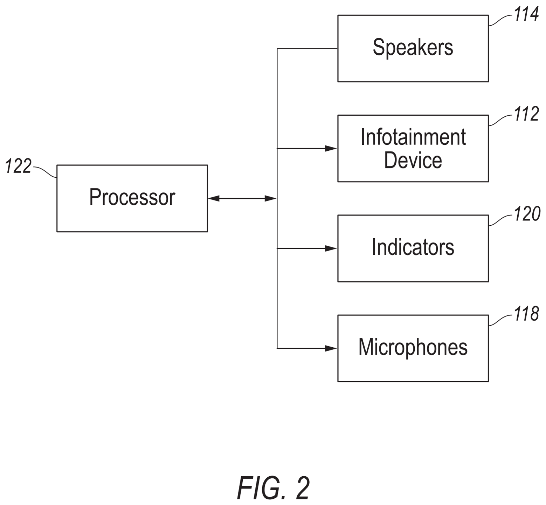

Figure 1 illustrates an example vehicle audio system 100 for a vehicle 102. The system 100 may include the vehicle 102 and a remote network 106. The vehicle 102 may include a processor 110 arranged within a vehicle. The processor 110 may be included in the vehicle head unit, or a vehicle ECU. The processor 110 may include various vehicle systems such as navigation, infotainment, autonomous vehicle systems, etc. The processor 110 may include an audio system processor 122 (as shown in Figure 2) configured to determine when and where to audibly play certain audio signals within the vehicle 102. The vehicle processor 110 and/or the audio system processor 122 may each include a controller (not shown) configured to control various vehicle systems and devices. The processors 110, 122 may be interchangeable in that each may handle any of the processes described herein.

The vehicle 102 may include a plurality of internal infotainment devices 112. The infotainment devices 112 may be devices configured to present content to a user, either audibly, visually, haptically, etc., within the vehicle cabin. For example, the infotainment devices 112 may include a vehicle speaker configured to present audible sounds within the vehicle 102. The infotainment devices 112 may include a display or projector configured to visually present information. One or more of these devices may make up the infotainment device 112. For example, the infotainment device 112 may include devices that provide both audio and video information (e.g., both a speaker and a display). In some examples, the infotainment devices 112 may be heads up displays, center console display, rear seat back display, etc. The infotainment devices 112 may include a single infotainment device in front of the driver, or may include multiple devices arranged at various locations throughout the vehicle 102. In the example shown in Figure 1, a first infotainment device 112 is arranged at the vehicle head unit.

Vehicle speakers 114 are shown separately but could be included in the infotainment devices 112. The speakers 114 may be a pair of speakers configured to emit audible sounds intended to be heard by a driver or occupant. In the examples disclosed herein, the speakers 114 may be arranged in the headrests of the vehicle seats, though application of the system and methods disclosed may be applicable to speakers 114 at other locations. The speakers 114 may emit binaural signals to create a 3D listening experience. The audio signals may be configured to emit sound at perceived or virtual locations, which is discussed in more detail herein. In some examples, these speakers 114 may be the only speakers that emit audio, while in other examples, these speakers 114 may compliment other speakers in the vehicle 102.

The infotainment devices 112 may present content, such as media content including music, video, etc., to the vehicle occupants. The content may include various forms of infotainment, alerts, etc. In one example, the infotainment devices 112 may present and playback audio content as requested by the vehicle occupants at such as a specific radio station, artist, song, content, etc. In another example, the information may present requested navigation commands as defined by a driving route to a desired destination.

Furthermore, the infotainment devices 112 may be portable personal devices of each occupant such as the occupants' phone or tablet. The vehicle speakers 114 may also be included in the infotainment devices 112 or function as additional infotainment devices 112. The infotainment devices 112 and the vehicle speakers 114 may be used interchangeably herein and may be primarily configured to provide high quality audio to the vehicle driver. More or less infotainment devices 112 and speakers 114 may be included in the vehicle.

The vehicle 102 may also include a plurality of microphones 118. The microphones 118 may be facing the interior of the vehicle 102, or be arranged external to the vehicle, and may be configured to acquire ambient noise, voice sounds, and other acoustic events within or external to the vehicle 102. The audio signals acquired by the microphones 118 may be used to active noise cancelation, voice ducking, etc.

The vehicle 102 may include a plurality of visual indicators 120. These visual indicators may be lights, or other forms of items to grab the attention of the user. In the example of FIG. 1, seven visual indicators are arranged throughout the vehicle cabin and are configured to illuminate simultaneously with an audible sound indicating the perceived location of an alert. For example, another vehicle may be located in the vehicle's blind spot, and thus, the light closest to that blind spot may illuminate at the same time that the speakers 114 issue an audible warning "blind spot detected." The audible sound may be a binaural virtual left surround audio signal to further indicate the location of the other vehicle.

The visual indicators 120 may be placed along the dashboard (e.g., indicator 120a), the front left and right A-pillars (e.g., indicators 120b and 120c, respectively), in the door handles or B-pillars (e.g., indicators 120d and 120e), as well as in the rear door handles or C-pillars (e.g., indicators 120e and 120f). In some examples, the infotainment devices 112 may function as a visual indicator 120 in that the infotainment device 112 may illuminate or illustrate certain secondary cues.

Although not shown, the vehicle 102 may include a connected vehicle system including one or more systems facilitated via connected car or connected vehicle telematics. These systems may include features available on a separate mobile device, usually a mobile device of the driver. The processor 110 of the vehicle 102 may communicate wirelessly with the mobile device (not shown) to access data within the mobile device such as the driver's calendar, navigation system, GPS antenna, etc. The data may include data specific and local to the mobile device of the driver such as music, photos, etc. The data may also include dynamic data provided from external sources such as weather information, traffic information, etc. This data may relate to instances typically of interest to the vehicle driver and may indicate to the processor 122 that the information should be passed through to the driver. In addition to or in alternative to the connected vehicle system, the processor 110 may receive data from the network 106, other mobile devices, etc.

Figure 2 illustrates an example block diagram of the vehicle audio system 100 of Figure 1. The processor 122 may instruct the speakers 114 and indicators 120 to operate in one of several modes. The processor 122 may also instruct the infotainment devices 112, as well as other vehicle components, such as lights, additional speakers, etc. to perform or operate in a certain way.

A first mode may be a training mode configured to train new users of the vehicle 102. This mode or phase may occur during start up of the vehicle and may include a series of over exaggerated cues associated with certain sounds to give the user examples of a specific location associated with the respective binaural audio. As the vehicle starts up, the speakers 114 associated with the driver may deliver binaural audio signal of various virtual audio locations, similar to a 7.0 home theatre system. Each location may consist of an alert signal followed by a speech signal and then repeat the alert signal.

The alert signal may include a first non-speech sound such as a series of short bursts of noises, musical instruments or context-aware signals. These alert signals may be adapted for each virtual location so that the user may perceive the location of the alert. In the example of noise bursts, broadband signals or different narrowband signals may be used. In one example, broadband signals are preferred for localizing. Spectral weightings may also be applied to different signals to emphasize their virtual locations. By using short noise bursts, the listeners may be capable of getting a sense of reverberations, allowing the listeners to have a better perception of localization and relative distance.

In the example of musical instruments, different instrument families may be used for different virtual locations. For example, a sound of a string instrument may be used for the frontal hemisphere signals, a wind instrument for the rear hemisphere, or a brass instrument for the left and right sound channels. While the instruments may be varied, the sounds should be consistent with each virtual location throughout the training mode so as to remain consistency. For example, if a trumpet sound is used for the virtual front center channel, the trumpet sound should not be used for the virtual rear channel.

In the example of context-aware sounds, these sounds should be representative of sounds typically encountered while driving. For example, these sounds may include revving engines, construction sounds, sirens, animals, etc.

The speech signal followed by the first alert signal may include an audible phrase of a spoken binaural recording identifying the virtual location. This may be, for example, "this is the left surround channel." The alert signal may repeat after the speech signal in order to further facilitate the learning.

During the training mode, the processor 122, in addition to instructing the speakers 114 to play the alert and speech signals, may also instruct the indicators 120 to concurrently provide additional contextual cues. Further, the additional cues may also be provided by the infotainment device 112 on the digital dashboard, interior car cabin lights, or additional speakers in the vehicle (e.g., speakers in the door or along the dashboard.) These cute may be used by the listeners to gain context with the alert and audio signals.

The processor 122 may instruct the indicators 120 to illuminate in conjunction with the virtual location of the alert and audio signals. As explained, visual indicators hold more weight for the listener as to the location of a certain event more so than those of audible indicators. Because of this, during the training mode, the association of the binaural audio signal and the illumination of the indicator at the virtual location may train the user to associate the binaural audio with that location.

In another example, other cabin speakers may be used to provide the contextual cue, such as speakers located in the door woofers, center consoles, dash board, etc. These supplementary speakers may provide similar sounds to that of the headrest speakers 114, but with a monaural signal. During the training mode, the supplementary speakers may provide the additional cue at a location associate with the virtual location. The binaural signals may be delivered first, followed by the monaural signal from the supplementary speakers.

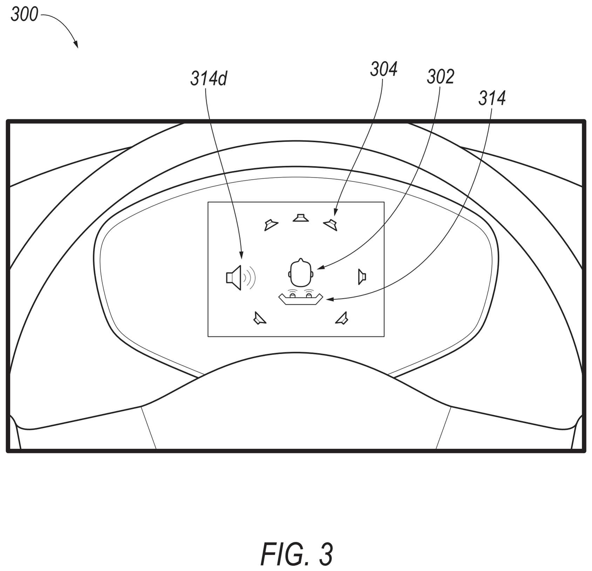

In another example of a contextual cue, a display may be used. The display may be part of the infotainment device 112. FIG. 3 illustrates an example display 300 for providing contextual cues with the binaural audio signals. This example display may be presented via a screen to provide a digital display of the audio system during the learning mode. In the example of rear speakers, an indicator near the actual speaker may not be visible unless an occupant turns their head. The display 300 may include visual indicia of a user 302 and speakers 314 behind the user 302. Various virtual locations 304 are also arranged around the user 302. This may emulate the seven channel audio configuration typically found in a home theater (i.e., a 7.1 setup) along the transverse plane. These virtual locations 304 are each associated with a speaker, and in this example, the left surround speaker is indicated as being activated.

As the binaural alert and speech signal are played in the training mode, the associated speaker may be highlighted or emphasized on the display 300. By doing so, the listener will correlate the visual stimulus with the auditory stimulus, thus increasing the learning or training for the audible cues in the future. As shown, a left surround speaker 314d is highlighted.

The processor 122 may perform many other functions, including playing media, alerts, navigation, etc. The processor 122 may also receive audio signals from the microphones 118, which may be selectively passed through to the speakers 114.

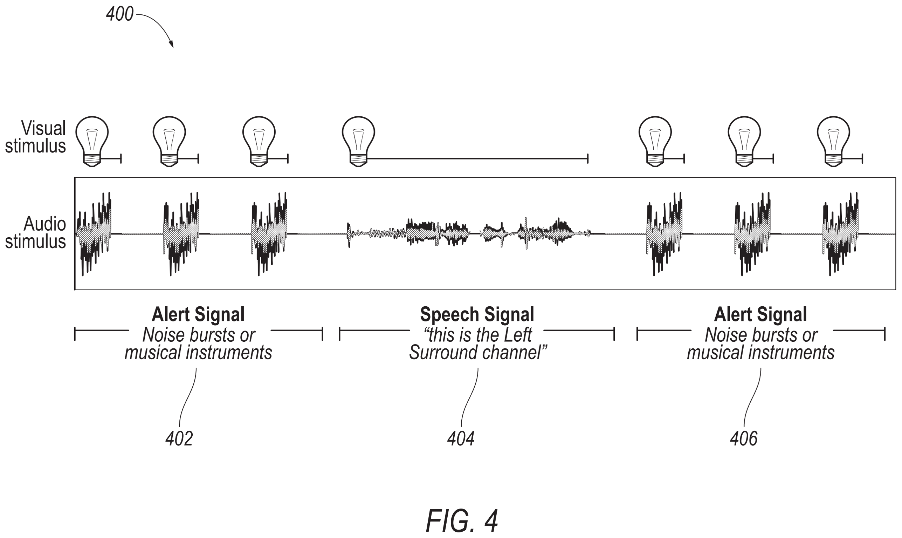

FIG. 4 illustrates an example sequence 400 of the training mode in terms of the binaural audio. A first session 402 emits an alert signal. In the example where the alert signal includes noise bursts, the visual indicator 120 associated with the virtual location is illuminated concurrent with the noise bursts. That is, the visual indicator 120 may flash or blink at the same frequency as the noise bursts. A second session 404 may follow the first session and include the speech signal. As explained, this may be a audible spoken sound indicating the virtual location such as "this is the left surround channel." During this session, the indicator 120 may remain illuminated during the playback of the speech signal. Finally, a third session 406 may repeat that of the first session 402 to increase or reiterate for the user the location and sounds. While three sessions are illustrated and described herein, more or less sessions can be appreciated. Further, the alert signal may include varying sequences of bursts at various frequencies, pitches, gains, etc.

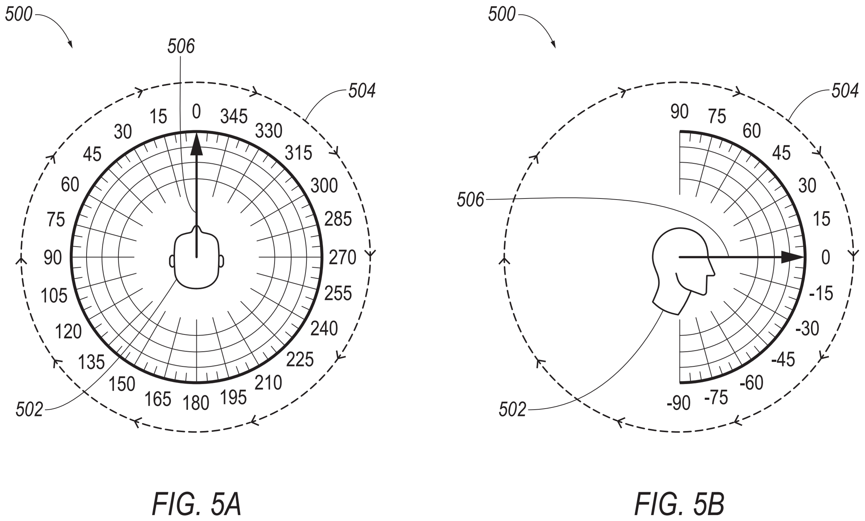

FIGs. 5A and 5B illustrate example virtual audio splash screens 500. This splash screen may be used to improve spatial audio localization during the training mode. A splash screen is a graphical widget typically used in applications, games, software launches or introduction pages to websites. While the purpose of these screens is primarily a visual indicator to inform a user that the media is loading, such a concept may also be applied to the present audio system 100. The infotainment device 112 may present this splash screen 500. The splash screen may include video or moving objects that correlate to the audio signals. A listener icon 502 may be arranged in the center of a round diameter 504 representing the listening spectrum in a two-dimensional horizontal and vertical plane. The audio signals may dynamically move throughout the vehicle cabin. As the dynamic audio signals move, so does a trajectory 506 indicating the virtual location and/or object trajectory. Although an example display showing two-dimensional mapping is illustrated, three-dimensional illustrations and diagrams may also be contemplated.

It has been shown that using a moving audio object or rotating your head can help in better sound localization, reduce front-back confusion and reduce the cone of confusion error. Instead of starting with static virtual audio signals, this method uses dynamic audio objects which rotate 360 degrees around the listener. The audio objects can rotate along the horizontal and vertical plane, as shown in FIGs. 5A and 5B. In addition, the audio object can also be rotated along the diagonal plane or move closer or further away to enhance distance perception, depending on the application. In doing so, this gives the listener a full 360-degree frame of reference. Once the dynamic audio objects have completed their trajectory, static bursts can then be played for further spatial reinforcement, if needed. By having the dynamic audio objects first, the listener will have a better frame of reference for problematic locations, like the virtual front channels. The visual display would reflect this movement.

Returning to FIG. 2, the processor 122 may also operate in a driving-training mode. This, in contradistinction with the training mode, may occur while the user is operating the vehicle 102. During this mode, similar to the training mode, the processor 122 may instruct the speakers 114 to emit audio signals including both alert signals and speech signals. The audio signals may be based on situations arising during driving. For example, the user is on the highway and initiates their blinker indicated a desire to merge, a lane departure warning such as a blind spot warning may be initiated by the processor 122. In this example, the alert signal may include a car sound or musical sounds, where the speech signal may include a spoken warning such as "warning, there is another vehicle in your blind spot." By including this auditory alert, the driver may be able to confirm when it is safe to merge without needed to turn their head and looking away from the road. Other examples include navigational cues, parking or other hazards, etc. In the example of navigational prompts, different instruments may be associated with different locations.

Additional cues may be used during this mode similar to the training mode. For example, the indicators 120 may still illuminate during the audio signals to indicate the virtual location. However, unlike the training mode, the alerts are based on real-time situational information received by the processor 122 by the vehicle's sensors, navigation systems, etc., and are intended to allow for real-time training of the binaural audio. As the driver continues to learn the various cues, the more the driver will inherently rely on the binaural audio cues alone and the need for the additional visual cues will be unnecessary.

Further, the processor 122 may also operate in a third reinforcement mode. This may occur, similar to the training mode, at start up of the vehicle. This mode is intended for users that are already familiar with the associated cues from the previous training and driving-training phases. When the vehicle starts, the processor 122 may instruct the speakers 114 to emit audio signals that include alert signals, but contrary to the other modes, no speech signals are emitting. The processor 122 may instruct the indicators 120 to concurrently illuminate. The purpose of this mode is to reinforce the learned cues before the driver beings operating the vehicle. The cues are shorter in this mode than the prior modes and may cease after the driver has sufficient predefined trips, or trip lengths. Since the cues are short, and initiated at vehicle start up, there is minimal disruption to the user.

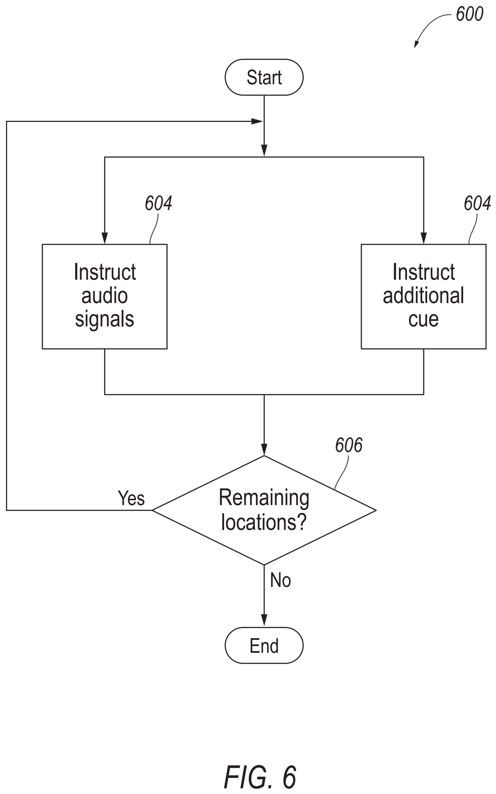

FIG. 6 illustrates an example process 600 of the audio system for the vehicle of FIG. 1 in a training mode. The process 600 may begin at block 602 with the processor 122 instructing an audio signal to be emitting by the speakers 114. The audio signal may be associate with a specific virtual location within the vehicle. As explained, in the training mode, the audio signal may include an alert signal followed by a speech signal, followed by another alert signal. The alert signals may include noise bursts while the speech signal may include a spoken phrase.

At block 604, the processor 604 may concurrently instruct for the additional cues. As explained, in one example, the instruction may be for the visual indicator 120 to illuminate. The indicator 120 may be the indicator 120 located at the in-cabin location associated with the virtual location of the audio signal. The illumination, as explained with respect to FIG. 4, may mimic the noise bursts in an off-on or blinking pattern, and be constant during the speech signal. Such additional cue provided by the indicator may provide training for the user to learn that audible virtual cues are associate with a specific vehicle location. Additionally or alternatively, other cues may be instructed via other displays, speakers, etc.

At block 606, the processor 122 may determine if there are remaining locations to be trained, i.e., at an n+1 location. If so, the process 600 continues until audio and visual cues for each location have been performed. In another example, the processor 122 may instruct for several rounds of the training at each location until a predetermined number of rounds has been achieved. This may be concurrent rounds at a single vehicle start up, or non-concurrent total running training rounds that span across multiple trips and vehicle start ups for the specific user. Once there are no more remaining locations, the process 600 ends.

While the system described herein is referenced with respect to headrest speakers, other arrangements and location of speakers may be appreciated, both within a vehicle, and with other non-automobile related fields. Further, the system 100 may include a game-like aspect to encourage users to associate the direction of the speaker with a location. For example, points awards could be given for the fastest time for identifying direction of speaker. The display may output user scores or rankings.

Accordingly, the system described herein improves driver satisfaction by continuously training the user to be better acclimated to the audible cues provided to them via vehicle headrest speakers. By training the user, the user may enjoy an increased spatial audio perception and may in turn rely on audio cues alone during driving, lessoning user distraction.

Computing devices described herein generally include computer-executable instructions, where the instructions may be executable by one or more computing or hardware devices such as those listed above. Computer-executable instructions may be compiled or interpreted from computer programs created using a variety of programming languages and/or technologies, including, without limitation, and either alone or in combination, Java^{™}, C, C++, Visual Basic, Java Script, Perl, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of computer-readable media.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. An in-car audio system, comprising:
at least one vehicle speaker arranged in a vehicle headrest behind an occupant and configured to transmit audio signals to the associated occupant, the at least one vehicle speaker including a pair of speakers configured to provide binaural audio signals to the associated occupant;
at least one visual indicator arranged within a vehicle cabin at a first location and configured to provide a visual cue to the occupant;
a processor programmed to:
instruct the speaker to emit an audio signal perceived at the first location;
instruct the at least one visual indicator to concurrently illuminate with the audio signal to provide visual reinforcement to the occupant that the audio signal perceived is associated with the first location.

2. The system of claim 1, wherein audio signal includes at least one alert signal and speech signal.

3. The system of claim 2, wherein the alert signal includes sequential noise bursts.

4. The system of claim 3, wherein the processor is further programed to instruct the at least one visual indicator to illuminate at a frequency that mimics the frequency of the noise bursts.

5. The system of any of claims 2 to 4, wherein the audio signal includes a second alert signal following the speech signal.

6. The system of any preceding claim, wherein the illuminator is at least one of a light and a screen.

7. An in-car audio system, comprising:
at least a pair of vehicle speakers configured to transmit binaural audio signals to the associated occupant at perceived at a plurality of virtual locations throughout a vehicle cabin;
at least one visual indicator arranged at each of the plurality of locations throughout the vehicle cabin, the visual indicators configured to provide a visual cue to the occupant at the respective location;
a processor programmed to:
instruct the speakers to emit an audio signal perceived at a first one of the virtual locations;
instruct the at least one visual indicator associated with the first one of the virtual locations to concurrently illuminate with the emitting of the audio signal to provide visual reinforcement to the occupant that the audio signal perceived is associated with the first location.

8. The system of claim 7, wherein audio signal includes a first alert signal followed by a speech signal, the speech signal followed by a second alert signal.

9. The system of claim 8, wherein the alert signal includes noise bursts and wherein the processor is further programed to instruct the at least one visual indicator to illuminate at a frequency that mimics the frequency of the noise bursts.

10. The system of any preceding claim, wherein the speech signal includes audible speech instructions indicating the first location.

11. An in-car audio system, comprising:
at least one vehicle speaker arranged in a vehicle headrest behind an occupant and configured to transmit audio signals to the associated occupant, the at least one vehicle speaker including a pair of speakers configured to provide binaural audio signals to the associated occupant;
at least one infotainment display device arranged within the vehicle cabin and configured to provide visual confirmation to a user associated with the virtual location;
a processor programmed to:
instruct the speaker to emit an audio signal perceived at a first location;
instruct the at least one infotainment device to highlight a first location thereon associated with the perceived location to provide visual reinforcement to the occupant that the audio signal perceived is associated with the first location.

12. The system of claim 11, wherein the highlighted first location at the display device includes at least one of the following:
- an icon indicating the first location relative to the occupant,
- an object trajectory indicating the first location relative to the occupant along a horizontal and vertical plane.

13. The system of claim 11 or 12, wherein the at least one infotainment display device includes a plurality of display devices arranged throughout the cabin, each associated with an one of a plurality of locations.

14. The system of any of claims 11 to 13, wherein the audio signal includes a first alert signal followed by a speech signal, and a second alert signal following the speech signal.

15. The system of any of claims 11 to 14, wherein the display device is at least one of the following:
- is a heads up display,
- is arranged in a dashboard visible by the occupant,
- is a mobile user device.
